# EUROPEAN PATENT APPLICATION

(11) **EP 4 224 548 A2**
(43) Date of publication of application: **09.08.2023**
(21) Application number: 23154867.8
(22) Date of filing: 03.02.2023
(51) Int. Cl.: H01M 4/04, H01M 4/13, H01M 10/0525, H01M 4/02

(54) **CATHODE FOR LITHIUM SECONDARY BATTERY AND LITHIUM SECONDARY BATTERY INCLUDING THE SAME**

(30) Priority: 04.02.2022 KR 20220014955
(71) Applicant: SK On Co., Ltd., Seoul 03161 (KR)
(72) Inventor: KO, Byoung Ho, 34124 Daejeon (KR); KIM, Jeong A, 34124 Daejeon (KR); LEE, Joon Yeob, 34124 Daejeon (KR); JIN, Jae Kyu, 34124 Daejeon (KR)
(74) Representative: Prüfer & Partner mbB Patentanwälte · Rechtsanwälte

(57) **Abstract**

A cathode for a lithium secondary battery of embodiments of the present invention includes: a cathode current collector; and a cathode active material layer including a first cathode active material layer and a second cathode active material layer sequentially laminated on the cathode current collector, wherein the first cathode active material layer and the second cathode active material layer include first cathode active material particles and second cathode active material particles having different particle structures from each other in crystallography or morphology, and a mixing weight ratio of the second cathode active material particles to the first cathode active material particles in the first cathode active material layer may be different from a mixing weight ratio of the second cathode active material particles to the first cathode active material particles in the second cathode active material layers. Therefore, it is possible to maximize the electrode density and minimize an increase in resistance of the cathode.

## Description

### [BACKGROUND OF THE INVENTION]

### 1. Field of the Invention

The present invention relates to a cathode for a lithium secondary battery and a lithium secondary battery including the same. More specifically, the present invention relates to a cathode for a lithium secondary battery which includes a lithium transition metal oxide-based cathode active material and a lithium secondary battery including the cathode.

### 2. Description of the Related Art

A secondary battery is a battery which may be repeatedly charged and discharged. With rapid progress of information and communication, and display industries, the secondary battery has been widely applied to various portable telecommunication electronic devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickel-cadmium battery, and a nickel-hydrogen battery. Among them, the lithium secondary battery has a high operating voltage and a high energy density per unit weight, and is advantageous in terms of a charging speed and light weight. In this regard, the lithium secondary battery has been actively developed and applied as a power source.

For example, the lithium secondary battery may include: an electrode assembly including a cathode, an anode, and a separation membrane (separator); and an electrolyte in which the electrode assembly is impregnated. The lithium secondary battery may further include, for example, a pouch-shaped outer case in which the electrode assembly and the electrolyte are housed.

As a cathode active material for a lithium secondary battery, a lithium transition metal oxide having a secondary particle structure, in which primary particles are agglomerated, is used. In the case of secondary particles, there is a problem in that micro-cracks occur inside the secondary particles during long term charging and discharging. In addition, when increasing an electrode density to implement a high energy density, there is a problem in that the secondary particles are collapsed. Accordingly, in order to solve these problems, development of a structurally stable cathode active material by developing a cathode active material such as a single crystal or a single particle has recently been proceeded.

For example, Korean Patent Publication Laid-Open No. 10-2021-0120525 discloses a cathode active material including a lithium-based composite oxide having a single crystal structure, but has a limitation in providing minimization of an increase in resistance together with sufficient high-density characteristics of the electrode.

### [SUMMARY OF THE INVENTION]

An object of the present invention is to provide a cathode for a lithium secondary battery having improved structural stability and operational reliability.

Another object of the present invention is to provide a lithium secondary battery including the cathode having improved structural stability and operational reliability.

To achieve the above objects, according to an aspect of the present invention, there is provided a cathode for a lithium secondary battery including: a cathode current collector; and a cathode active material layer comprising a first cathode active material layer and a second cathode active material layer, which are sequentially laminated on the cathode current collector, wherein the first cathode active material layer and the second cathode active material layer include first cathode active material particles and second cathode active material particles, which have different particle structures from each other in crystallography or morphology, and a mixing weight ratio of the second cathode active material particles to the first cathode active material particles in the first cathode active material layer is different from a mixing weight ratio of the second cathode active material particles to the first cathode active material particles in the second cathode active material layer.

In some embodiments, the first cathode active material particle may have a polycrystalline structure, and the second cathode active material particle may have a single crystal structure.

In some embodiments, the first cathode active material particle may have a secondary particle structure in which a plurality of primary particles are integrally aggregated, and the second cathode active material particle may have a single particle structure.

In some embodiments, the mixing weight ratios of the second cathode active material particles to the first cathode active material particles in the first cathode active material layer and the second cathode active material layer may be 1/9 to 1, respectively.

In some embodiments, the mixing weight ratio of the second cathode active material particles to the first cathode active material particles in the first cathode active material layer may be 1/9 to 1/2, and the mixing weight ratio of the second cathode active material particles to the first cathode active material particles in the second cathode active material layer may be 1/2 to 1.

In some embodiments, the mixing weight ratio of the second cathode active material particles to the first cathode active material particles in the first cathode active material layer may be smaller than the mixing weight ratio of the second cathode active material particles to the first cathode active material particles in the second cathode active material layer.

In some embodiments, the cathode active material layer may further include at least one additional cathode active material layer laminated between the first cathode active material layer and the second cathode active material layer or on the second cathode active material layer, and the additional cathode active material layer may include the first cathode active material particles and the second cathode active material particles.

In some embodiments, a mixing weight ratio of the second cathode active material particles to the first cathode active material particles of at least one layer included in the additional cathode active material layer may be different from each of the mixing weight ratios thereof in the first cathode active material layer and the second cathode active material layer.

In some embodiments, the number of the additional cathode active material layers may be 1 to 3.

In some embodiments, the first cathode active material particles and the second cathode active material particles may include a lithium-nickel composite metal oxide, respectively, and a molar ratio of nickel among metal elements except for lithium in the first cathode active material particles may be 0.8 or more.

In some embodiments, a molar ratio of nickel among metal elements except for lithium in the second cathode active material particles may be 0.8 or more.

In some embodiments, the molar ratio of nickel among metal elements except for lithium in the second cathode active material particles may be smaller than the molar ratio of nickel in the first cathode active material particles.

In some embodiments, an average particle diameter (D₅₀) of the second cathode active material particles may be smaller than an average particle diameter (D₅₀) of the first cathode active material particles.

In some embodiments, a density of the cathode active material layer may be 3.5 g/cc or more and 4.5 g/cc or less.

According to another aspect of the present invention, there is provided a lithium secondary battery including: the cathode for a lithium secondary battery according to exemplary embodiments; and an anode disposed to face the cathode.

The lithium secondary battery cathode according to the above-described embodiments of the present invention may include a cathode active material layer having a multilayer structure. In the multilayered cathode active material layer, the first cathode active material layer and the second cathode active material layer may include first cathode active material particles and second cathode active material particles, which have different particle structures from each other in crystallography or morphology, and a mixing weight ratio of the second cathode active material particles to the first cathode active material particles in the first cathode active material layer may be different from a mixing weight ratio of the second cathode active material particles to the first cathode active material particles in the second cathode active material layer.

Accordingly, it is possible to implement a lithium secondary battery with a minimized electrode resistance increase rate while maximizing the electrode density.

### [BRIEF DESCRIPTION OF THE DRAWINGS]

The above and other objects, features and other advantages of the present invention will be more clearly understood from the following detailed description taken in conjunction with the accompanying drawings, in which:
FIGS. 1 and 2 are schematic cross-sectional views illustrating cathode of a lithium secondary batteries according to exemplary embodiments, respectively;
FIGS. 3 and 4 are a schematic plan view and a cross-sectional view illustrating the lithium secondary battery according to exemplary embodiments, respectively; and
FIG. 5 is a scanning electron microscopy (SEM) image illustrating a lithium secondary battery according to Comparative Example 1.

### [DETAILED DESCRIPTION OF THE INVENTION]

According to embodiments of the present invention, a cathode for a lithium secondary battery may include a cathode active material layer having a multilayer structure including first cathode active material particles and second cathode active material particles, which have different particle structures from each other in crystallography or morphology. Accordingly, it is possible to implement a lithium secondary battery with a minimized electrode resistance increase rate while maximizing the electrode density.

Hereinafter, preferred embodiments of the present invention will be described in detail with reference to the accompanying drawings. However, since the drawings attached to the present disclosure are only given for illustrating one of several preferred embodiments of present invention to easily understand the technical spirit of the present invention with the above-described invention, it should not be construed as limited to such a description illustrated in the drawings.

As used herein, the terms "first" and "second" do not limit the number or order of subjects modified by the "first" and the "second," but are used to distinguish the modified subjects which are different from each other.

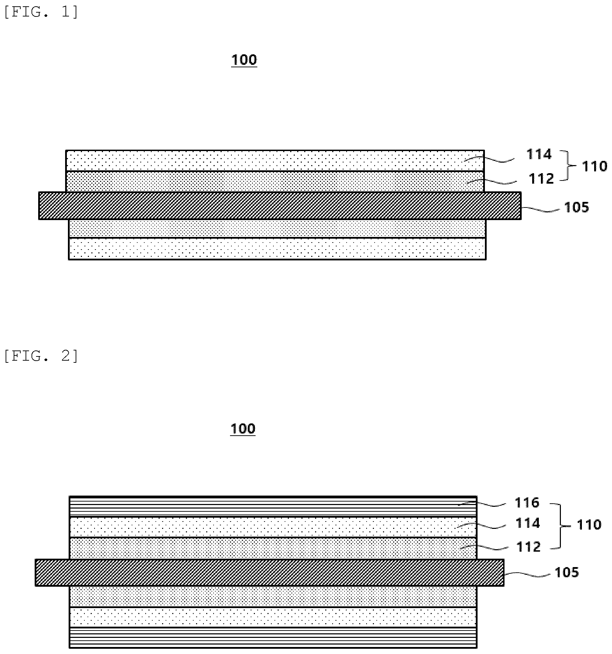

FIG. 1 is a schematic cross-sectional view illustrating a cathode of a lithium secondary battery according to exemplary embodiments.

Referring to FIG. 1, a cathode 100 includes a cathode active material layer 110 formed on at least one surface of a cathode current collector 105. The cathode active material layer 110 may be formed on both surfaces (e.g., an upper surface and a lower surface) of the cathode current collector 105.

The cathode current collector 105 may include, for example, stainless steel, nickel, aluminum, titanium, copper, or an alloy thereof, and preferably includes aluminum or an aluminum alloy.

According to exemplary embodiments, the cathode active material layer 110 may include a first cathode active material layer 112 and a second cathode active material layer 114. Thereby, the cathode active material layer 110 may have a multilayer structure (e.g., a double-layer structure) in which a plurality of cathode active material layers are laminated.

In some embodiments, the cathode active material layer 110 may further include at least one additional cathode active material layer laminated between the first cathode active material layer 112 and the second cathode active material layer 114 or on the second cathode active material layer 114.

For example, one to three additional cathode active material layers may be laminated on the second cathode active material layer 114. Accordingly, the cathode active material layer 110 may have a multilayer structure in which the plurality of cathode active material layers are laminated.

FIG. 2 illustrates a configuration in which one additional cathode active material layer 116 is further laminated on the second cathode active material layer 114. FIG. 2 illustrates a configuration in which one layer of the additional cathode active material layer 116 is further laminated for the convenience of description, but two layers or three layers may be laminated, and greater than three layers may be further laminated as necessary.

As shown in FIGS. 1 and 2, the first cathode active material layer 112 may be formed on the surface of the cathode current collector 105, for example, may be formed on the upper and lower surfaces of the cathode current collector 105, respectively. The second cathode active material layer 114 may be formed on the first cathode active material layer 112.

The first cathode active material layer 112 may directly contact with the surface of the cathode current collector 105. The second cathode active material layer 114 may directly contact with the upper surface of the first cathode active material layer 112.

The first cathode active material layer 112 and the second cathode active material layer 114 according to an exemplary embodiment may include first cathode active material particles and second cathode active material particles, which have different particle structures from each other in crystallography or morphology. The first cathode active material layer 112 and the second cathode active material layer 114 may include the first cathode active material particles and the second cathode active material particles, respectively.

In this case, a mixing weight ratio of the second cathode active material particles to the first cathode active material particles in the first cathode active material layer 112 may be different from a mixing weight ratio of the second cathode active material particles to the first cathode active material particles in the second cathode active material layer 114.

According to embodiments, the first cathode active material layer 112 and the second cathode active material layer 114 may include first cathode active material particles and second cathode active material particles, which have different particle structures from each other in crystallography. The first cathode active material particles and the second cathode active material particles, which have different particle structures from each other in crystallography, may mean first cathode active material particles having a polycrystalline structure and second cathode active material particles having a single crystal structure.

As used herein, the term "single crystal" may refer to a structure which has only one crystal in a particle and does not include a grain or grain boundary inside the particle.

As used herein, the term "polycrystal" may refer to a structure which has a plurality of crystals in a particle and includes a crystal grain or crystal grain boundary inside the particle.

For example, electron-backscattered diffraction (EBSD) is a crystal orientation analysis method located in the middle of X-ray diffraction analysis (XRD) and transmission electron microscopy (TEM) analysis methods, and enables to confirm and obtain orientation information of crystal grains which form a microstructure of a material. For example, the polycrystal or single crystal may be distinguished through the crystal grain orientation distribution of the particles measured by EBSD.

According to embodiments, the first cathode active material layer 112 and the second cathode active material layer 114 may include a mixture or blend of the first cathode active material particles having a polycrystalline structure and the second cathode active material particles having a single crystal structure.

According to embodiments, the first cathode active material layer 112 and the second cathode active material layer 114 may include the first cathode active material particles and the second cathode active material particles, which have different particle structures from each other in morphology. The first cathode active material particles and the second cathode active material particles, which have different particle structures from each other in morphology, may mean first cathode active material particles having a secondary particle structure and second cathode active material particles having a single particle structure.

As used herein, the term "secondary particle" may mean a particle in which a plurality of primary particles are aggregated or assembled to be substantially considered or observed as one particle. For example, the secondary particle may have greater than 10, 30 or more, 50 or more, or 100 or more of primary particles aggregated therein.

As used herein, the term "single particle" may mean a monolith formed of one particle regardless of the type and number of particle crystals, and may exclude a secondary particle structure in which the primary particles are aggregated or assembled. However, the single particle does not exclude: a form in which fine particles (e.g., particles having a volume of 1/100 or less based on a volume of the single particle) are attached to the surface of the particle; and a form in which 10 or less of the fine particles are included inside the particle.

For example, in the cathode active material layer 110, the single particles may be present in contact with each other. The form in which the single particles are present in contact with each other and the form of the secondary particle may be distinguished from each other, which can be confirmed through an SEM image. For example, 2 to 10 single particles may be present in contact with each other. That is, the particles are not distinguished in crystallography, and the primary particle and the single particle may have a single crystal or polycrystal.

According to embodiments, the first cathode active material layer 112 and the second cathode active material layer 114 may include a mixture or blend of first cathode active material particles having a secondary particle structure in which a plurality of primary particles are integrally aggregated, and second cathode active material particles having a single particle structure.

Hereinafter, the contents of the first cathode active material particle and the second cathode active material particle, which will be described below, may be commonly applied to both the case of having different particle structures in crystallography and the case of having different particle structures in morphology.

According to embodiments, the first cathode active material particle may have a polycrystalline or secondary particle structure. Thereby, the movement of ions between the crystal grain boundaries or the primary particles may be facilitated, charging/discharging speeds may be enhanced, and capacity retention characteristics may be improved.

However, in the case of the polycrystalline or secondary particle structure, since the plurality of crystal grains or primary particles are included therein, cracks may easily propagate inside the particle due to an impact upon occurring a penetration of the cell caused by an external object. Accordingly, when an electrode short-circuit occurs due to penetration, a generation amount or propagation speed of thermal energy may be rapidly increased due to overcurrent. In addition, when involving a process of applying a cathode active material slurry to the cathode current collector 105, followed by rolling the same to form the cathode 100, structurally weak first cathode active material particles may be pulverized or cracked due to a pressure propagated through crystal grain boundaries or voids between the primary particles. In this case, desired capacity and output characteristics may not be secured.

To solve these problems, by adding the second cathode active material particles having a structurally stable single crystal or single particle structure to the cathode active material layer 110, heat and shock propagation through the cracks generated inside the particles may be reduced. Thereby, a cathode having a high density may be prepared without damage to the cathode active material, and an increase in the electrode resistance may be minimized.

According to embodiments, the mixing weight ratio of the second cathode active material particles to the first cathode active material particles in the first cathode active material layer 112 may be different from the mixing weight ratio of the second cathode active material particles to the first cathode active material particles in the second cathode active material layer 114.

Preferably, the mixing weight ratio of the second cathode active material particles to the first cathode active material particles in the first cathode active material layer 112 may be smaller than the mixing weight ratio of the second cathode active material particles to the first cathode active material particles in the second cathode active material layer. When the structurally stable second cathode active material is included in the upper layer of the cathode active material layer 110 **in high content,** the active material particles may not be cracked or collapsed even when rolled at a high density during manufacturing the electrode, and it is possible to prevent the electrode resistance from being greatly increased.

According to embodiments, the mixing weight ratios of the second cathode active material particles to the first cathode active material particles in the first cathode active material layer 112 and the second cathode active material layer 114 may be 1/9 to 1, respectively.

Preferably, the mixing weight ratio of the second cathode active material particles to the first cathode active material particles in the first cathode active material layer 112 may be 1/9 to 1/2, and the mixing weight ratio of the second cathode active material particles to the first cathode active material particles in the second cathode active material layer 114 may be 1/2 to 1. Within the above range, it is possible to provide an optimal mixing ratio that maximizes the density of the electrode and minimizes an increase in the electrode resistance.

According to embodiments, the first cathode active material particles and the second cathode active material particles may include a lithium-nickel composite metal oxide, respectively. In this case, the first cathode active material particles and the second cathode active material particles may include nickel in the largest content (molar ratio) among metals except for lithium.

For example, the first cathode active material particles may have a nickel content of about 80 mol% or more among the metals except for lithium, and the second cathode active material particles may have a nickel content of about 80 mol% or more among the metals except for lithium.

According to some embodiments, the nickel content (or molar ratio) of the second cathode active material particles may be smaller than the nickel content of the first cathode active material particles.

In some embodiments, the first cathode active material particles may have a layered structure or chemical structure represented by Formula 1 below.

[Formula 1] LiₓM1ₐM2_{b}M3_{c}O_{y}

In Formula 1, M1, M2 and M3 may be selected from the group consisting of Ni, Co, Mn, Na, Mg, Ca, Ti, V, Cr, Cu, Zn, Ge, Sr, Ag, Ba, Zr, Nb, Mo, Al, Ga and B, and x, y, a, b and c may be in a range of 0<x≤1.2, 2≤y≤2.02, 0.8≤a≤0.99, 0.01≤b+c≤0.2 and 0<a+b+c≤1, respectively.

In some embodiments, M1, M2 and M3 in Formula 1 may be nickel (Ni), manganese (Mn) and cobalt (Co), respectively.

For example, nickel may be provided as a metal associated with an output and/or a capacity of the lithium secondary battery. As described above, by employing a polycrystalline or lithium transition metal oxide of the secondary particles, of which a molar ratio of nickel is 0.8 or more, as the first cathode active material particles, and forming the first cathode active material layer 112 to be in contact with the cathode current collector 105, high power and capacitance characteristics of the cathode 100 may be effectively obtained.

For example, manganese (Mn) may be provided as a metal associated with the mechanical and electrical stabilities of the lithium secondary battery. For example, cobalt (Co) may be a metal associated with the conductivity or resistance of the lithium secondary battery.

In some embodiments, a concentration ratio (or molar ratio) of nickel: cobalt: manganese in the particles of the first cathode active material may be adjusted to about 8:1:1. In this case, conductivity and life-span characteristics may be reinforced by including cobalt and manganese in substantially equal amount while increasing the capacity and output through the nickel in a molar ratio of about 0.8.

In some embodiments, the second cathode active material particles may have a layered structure or chemical structure represented by Formula 2 below.

[Formula 2] LiₓM1'ₐM2'_{b}M3'_{c}O_{y}

In Formula 2, M1', M2' and M3' may be selected from the group consisting of Ni, Co, Mn, Na, Mg, Ca, Ti, V, Cr, Cu, Zn, Ge, Sr, Ag, Ba, Zr, Nb, Mo, Al, Ga, W and B, and x, y, a, b and c may be in a range of 0<x≤1.2, 2≤y≤2.02, 0.8≤a≤0.99, 0.01≤b+c≤0.2 and 0<a+b+c≤1, respectively.

In some embodiments, the second cathode active material particles may also improve electrode resistance characteristics and reinforce stability by controlling the contents of cobalt and manganese while improving the capacity and output through the nickel in a molar ratio of about 0.8 or more.

A slurry for forming a first cathode active material layer may be prepared by mixing the above-described blend of the first cathode active material particles and second cathode active material particles with a binder, a conductive material and/or a dispersant in a solvent, followed by stirring the mixture. The slurry for forming the first cathode active material layer may be coated on the cathode current collector 105, followed by compressing and drying the same to form the first cathode active material layer 112.

In addition, a slurry for forming a second cathode active material layer may be prepared in the same manner as the slurry for forming a first cathode active material layer, and coated on the first cathode active material layer 112, followed by compressing and drying the same to form the second cathode active material layer 114. For example, a binder and a conductive material substantially the same as or similar to those used in forming the first cathode active material layer 112 may also be used in forming the second cathode active material layer 114. However, in this case, the mixing weight ratios of the second cathode active material particles to the first cathode active material particles included in the slurry for forming a first cathode active material layer and the slurry for forming a second cathode active material layer may be different from each other.

That is, the cathode active material layer having a multilayer structure may effectively implement desired properties (improvement of electrode density and minimization of increase in the electrode resistance) by differently adjusting the mixing weight ratios of the second cathode active material particles to the first cathode active material particles included in each cathode active material layer.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the first cathode active material layer 112 may be reduced and an amount of first cathode active material particles may be relatively increased, thereby improving the output and capacity of the secondary battery.

The conductive material may be included to facilitate the movement of electrons between the active material particles. For example, the conductive material may include a carbon-based conductive material such as graphite, carbon black, graphene, or carbon nanotubes and/or a metal-based conductive material including tin, tin oxide, titanium oxide, or a perovskite material such as LaSrCoO₃, and LaSrMnO₃.

In one embodiment, the cathode active material layer 110 may further include at least one additional cathode active material layer laminated between the first cathode active material layer 112 and the second cathode active material layer 114 or on the second cathode active material layer 114. The additional cathode active material layer may include the first cathode active material particles and the second cathode active material particles.

For example, the number of additional cathode active material layers may be 1 to 3. When forming the cathode active material layer 110 in a multilayer structure by further laminating the additional cathode active material layers, each layer of the cathode active material may include first cathode active material particles and second cathode active material particles, which have different particle structures from each other in crystallography or morphology.

The additional cathode active material layer further laminated may be prepared in the same manner as the above-described slurry for forming a first cathode active material layer, and coated between the first cathode active material layer 112 and the second cathode active material layer 114, or on the second cathode active material layer 114, followed by compressing and drying the same to form the additional cathode active material layer. In this case, the mixing weight ratio of the second cathode active material particles to the first cathode active material particles of at least one layer included in the additional cathode active material layer may be different from each of the mixing weight ratios thereof in the first cathode active material layer 112 and the second cathode active material layer 114. The mixing weight ratio of the second cathode active material particles to the first cathode active material particles in the additional cathode active material layer further laminated may be 1/9 to 1, and preferably 1/2 to 1. Accordingly, a high-density cathode and a battery with minimized increase in the electrode resistance may be implemented.

In one embodiment, an average particle diameter (e.g., D₅₀) of the second cathode active material particles may be smaller than an average particle diameter of the first cathode active material particles. Accordingly, propagation of heat and cracks due to penetration or rolling may be more effectively suppressed or reduced.

For example, the average particle diameter (D₅₀) of the second cathode active material particles may be about 1 to 20 pm, preferably about 1 to 17 µm, and more preferably about 2 to 15 um.

The average particle diameter (D₅₀) of the first cathode active material particles may be about 5 to 30 pm, preferably about 7 to 25 pm, and more preferably about 10 to 20 um.

In some exemplary embodiments, the first cathode active material particles and/or the second cathode active material particles may further include a coating layer formed on the surface thereof. For example, the coating layer may include Al, Ti, Ba, Zr, Si, B, Mg, P, W, or an alloy thereof, or an oxide thereof. These may be used alone or in combination of two or more thereof. The first cathode active material particles are passivated by the coating layer, thereby stability and life-span against penetration of an external object may be more improved.

In one embodiment, the above-described elements, alloys or oxides of coating layer may be inserted into the cathode active material particles as a dopant.

In some embodiments, for example, the first cathode active material layer 112 and the second cathode active material layer 114 may have a thickness of about 50 um to about 200 um, respectively. The thickness may be adjusted as necessary.

In one embodiment, a charge capacity and a discharge capacity of the second cathode active material may be 200 mAh/g or more. Preferably, the charge capacity may be 210 to 240 mAh/g, and the discharge capacity may be 180 to 220 mAh/g. Accordingly, a high-capacity electrode may be prepared while securing structural stability.

In one embodiment, a density of the cathode active material layer may be 3.5 g/cc or more and 4.5 g/cc or less, and preferably, 3.5 g/cc or more and 4.0 g/cc or less. As used herein, the term "density of the cathode active material layer" is a value obtained by dividing a total weight of the cathode active material layer by a total volume, and may be calculated, for example, by punching an electrode in a predetermined size and measuring the mass and volume of a portion except for the current collector.

As described above, by including the first cathode active material particles and the second cathode active material particles, which have different particle structures from each other in crystallography or morphology, in each layer of the cathode active material having a multilayer structure, it is possible to suppress cracks from occurring in the cathode active material particles even when rolling at a high pressure, such that a high-density cathode may be implemented.

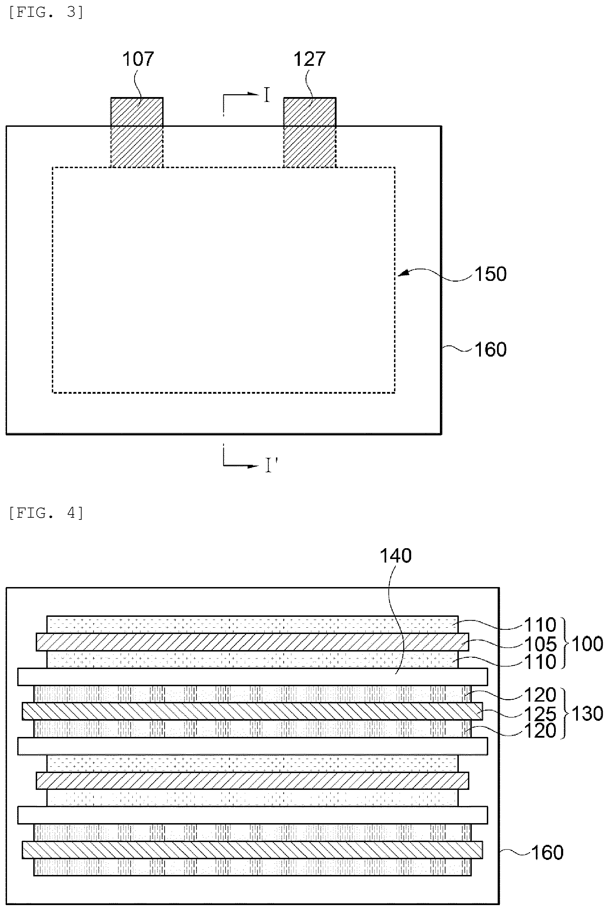

FIGS. 3 and 4 are a schematic plan view and a cross-sectional view of the lithium secondary battery according to exemplary embodiments, respectively. Specifically, FIG. 4 is a cross-sectional view taken on line I-I' in FIG. 3 in a thickness direction of the lithium secondary battery.

Referring to FIGS. 3 and 4, the lithium secondary battery may include an electrode assembly 150 accommodated in an outer case 160. As shown in FIG. 3, the electrode assembly 150 may include the cathode 100, an anode 130 and a separation membrane 140, which are repeatedly laminated.

The cathode 100 may include a cathode active material layer 110 coated on the cathode current collector 105. Although not illustrated in detail in FIG. 3, as described with reference to FIGS. 1 and 2, the cathode active material layer 110 may include a lamination structure of the first cathode active material layer 112 and the second cathode active material layer 114.

The anode 130 may include an anode current collector 125 and an anode active material layer 120 formed by coating the anode current collector 125 with the anode active material.

The anode active material useable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at a temperature of 1500°C or lower, mesophase pitch-based carbon fiber (MPCF) or the like. Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, a slurry may be prepared by mixing the anode active material with a binder, a conductive material and/or a dispersing material in a solvent, followed by stirring the mixture. At least one surface of the anode current collector 125 may be coated with the slurry, followed by compressing and drying to prepare the anode 130.

As the binder and the conductive material, materials which are substantially the same as or similar to the above-described materials used in the cathode active material layer 110 may be used. In some embodiments, the binder for forming the anode may include, for example, an aqueous binder such as styrene-butadiene rubber (SBR) for consistency with the carbon-based active material, and may be used together with a thickener such as carboxymethyl cellulose (CMC).

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

In some embodiments, the anode 130 may have an area (e.g., a contact area with the separation membrane 140) and/or volume larger than those/that of the cathode 100. Thereby, lithium ions generated from the cathode 100 may be smoothly diffused to the anode 130 without being precipitated in the middle, for example. Therefore, effects of simultaneously improving output and stability through a combination of the above-described first cathode active material layer 112 and the second cathode active material layer 114 may be more easily implemented.

According to exemplary embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, lamination, folding, or the like of the separation membrane 140.

The electrode assembly 150 may be housed in an outer case 160 together with an electrolyte to define the lithium secondary battery. According to exemplary embodiments, a non-aqueous electrolyte may be used as the electrolyte.

The non-aqueous electrolyte includes a lithium salt of an electrolyte and an organic solvent. The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN- and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethylsulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

As shown in FIG. 3, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 160 to form electrode leads (a cathode lead 107 and an anode lead 127) extending or exposed to an outside of the outer case 160.

FIG. 3 illustrates that the cathode lead 107 and the anode lead 127 protrude from an upper side of the outer case 160 in a planar direction, but positions of the electrode leads are not limited thereto. For example, the electrode leads may protrude from at least one of both sides of the outer case 160, or may protrude from a lower side of the outer case 160. Alternatively, the cathode lead 107 and the anode lead 127 may be formed so as to protrude from different sides of the outer case 160, respectively.

The lithium secondary battery may be manufactured, for example, in a cylindrical shape using a can, a square shape, a pouch type or a coin shape.

Hereinafter, specific experimental examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

### Example 1

After preparing a first cathode active material slurry by mixing first cathode active material particles (LiNi_{0.8}Co₀.₁Mn_{0.1}O₂, secondary particles in morphology that can be confirmed by EBSD, 11.5 µm) and second cathode active material particles (LiNi_{0.82}Co_{0.135}Mn_{0.045}O₂, single particles in morphology that can be confirmed by EBSD, 5.5 µm) in a weight ratio of 90:10 (a mixing weight ratio of the second cathode active material particles to the first cathode active material particles is about 1/5.6) to prepare a mixture, and then mixing the prepared mixture with CNT as a conductive material and PVDF as a binder in a weight ratio of 98.25:0.75:1.0, respectively, an aluminum current collector was coated with the prepared slurry, followed by drying and pressing the same to form a first cathode active material layer.

The EBSD measurement was performed under the following conditions.
- Device: EDAX, Digiview
- Embedded in Nova450 FE SEM and PFIB
- Data collection rate: 200 indexed pattern per second
- 1.4M pixel resolution: 1390 (H) X 1040 (W)
- 12-bit digital output; 40 and 20 MHz dual speed readont.

After a second cathode active material slurry by mixing the first cathode active material particles and the second cathode active material particles in a weight ratio of 60:40 (a mixing weight ratio of the second cathode active material particles to the first cathode active material particles was about 1/1.2) to prepare a mixture, and then mixing the prepared mixture with CNT as a conductive material and PVDF as a binder in a weight ratio of 98.25:0.75:1.0, the surface of the first cathode active material layer was coated with the prepared slurry, followed by drying and pressing the same to form a second cathode active material layer. Accordingly, a cathode, in which the first cathode active material layer and the second cathode active material layer are sequentially laminated on the cathode current collector, was prepared.

Electrode densities of the finally formed first cathode active material layer and second cathode active material layer were 3.7 g/cc, respectively.

An anode slurry, which includes 91.95% by weight ("wt.%") of natural graphite and 5 wt.% of silicon as an anode active material, 0.25 wt.% of single-walled carbon nanotubes (SWCNTs) as a conductive material, 1.5 wt.% of styrene-butadiene rubber (SBR) as a binder, and 1.3 wt.% of carboxymethyl cellulose (CMC) as a thickener, was prepared. A copper substrate was coated with the prepared anode slurry, followed by drying and pressing the same to prepare an anode.

After the cathode and anode prepared as described above were respectively notched in a predetermined size and laminated, then an electrode cell was fabricated by interposing a separator (polyethylene, thickness: 25 µm) between the cathode and the anode. Thereafter, tap parts of the cathode and the anode were welded, respectively. An assembly of the welded cathode/separator/anode was put into a pouch, followed by sealing three sides of the pouch except for one side into which an electrolyte is injected. At this time, a portion having the electrode tab was included in the sealing part. After injecting the electrolytic through the remaining one side except for the sealing part, the remaining one side was also sealed, followed by impregnation for 12 hours or more to prepare a lithium secondary battery.

The electrolyte used herein was prepared by dissolving 1M LiPF₆ in a mixed solvent of EC/EMC/DEC (25/45/30; volume ratio), then adding 1 wt.% of vinylene carbonate (VC), 0.5 wt.% of 1,3-propene sultone (PRS), and 0.5 wt.% of lithium bis(oxalato)borate (LiBOB) thereto.

### Examples 2 to 5

A lithium secondary battery was manufactured according to the same procedures as described in Example 1, except that mixtures were prepared by changing the mixing weight ratios of the first cathode active material particles and the second cathode active material particles included in the first cathode active material layer and the second cathode active material layer as described in Table 1 below, and the mixture, CNT as a conductive material and PVDF as a binder were mixed in a weight ratio of 98.25:0.75:1.0, respectively to form a cathode.

### Examples 6 and 7

Lithium secondary batteries were manufactured according to the same procedures as described in Example 1, except that the mixing weight ratios of the first cathode active material particles and the second cathode active material particles included in the first to a third cathode active material layer were changed as described in Table 1 below.

### Comparative Example 1

After a cathode active material slurry was prepared by mixing the first cathode active material particles and the second cathode active material particles in a weight ratio of 85:15 (the mixing weight ratio of the second cathode active material particles to the first cathode active material particles was about 1/5.6) to prepare a mixture, and then mixing the prepared mixture with CNT as a conductive material and PVDF as a binder, an aluminum current collector was coated with the prepared slurry, followed by drying and pressing the same to form a cathode active material in a single layer.

### Comparative Examples 2 to 4

Lithium secondary batteries were manufactured according to the same procedures as described in Example 1, except that the mixing weight ratios of the first cathode active material particles and the second cathode active material particles included in the first cathode active material layer and the second cathode active material layer were changed as described in Table 1 below.

### Experimental example

### 1. Evaluation of adhesion

For each of the cathodes prepared in the above examples and comparative examples, adhesion was measured using an adhesion measurement equipment (IMADA Z Link 3.1). Specifically, the adhesion was evaluated by measuring a force when peeling-off a surface of the cathode at an angle of 90 degrees after attaching the same to a tape. Result values are described in Table 1 below.

### 2. Measurement of direct current internal resistance (D DCIR)

At 50% point of state-of-charge (SOC), when sequentially increasing the C-rate to 0.2C, 0.5C, 1.0C, 1.5C, 2.0C, 2.5C and 3.0C, and performing charging and discharging on the secondary batteries manufactured in the examples and comparative examples at the C-rate for 10 seconds, terminal points of the voltage were composed with an equation of a straight line and a slope thereof was adopted as the DCIR. Result values are described in Table 1 below.

**[TABLE 1]**

| Section | Cathode active material layer structure and active material composition (%) | Adhesion (N) | DC-IR (mQ) |
|---|---|---|---|
| Example 1 | First cathode active material layer: secondary particle 90 + single particle 10 | 0.98 | 1.15 |
| | Second cathode active material layer: secondary particle 60 + single particle 40 | | |
| Example 2 | First cathode active material layer: secondary particle 85 + single particle 15 | 0.96 | 1.19 |
| | Second cathode active material | | |
| | layer: secondary particle 55 + single particle 45 | | |
| Example 3 | First cathode active material layer: secondary particle 80 + single particle 20 | 0.99 | 1.18 |
| | Second cathode active material layer: secondary particle 50 + single particle 50 | | |
| Example 4 | First cathode active material layer: secondary particle 70 + single particle 30 | 0.90 | 1.20 |
| | Second cathode active material layer: secondary particle 65 + single particle 35 | | |
| Example 5 | First cathode active material layer: secondary particle 55 + single particle 45 | 0.87 | 1.23 |
| | Second cathode active material layer: secondary particle 85 + single particle 15 | | |
| Example 6 | First cathode active material layer: secondary particle 85 + single particle 15 | 1.05 | 1.15 |
| | Second cathode active material layer: secondary particle 70 + single particle 30 | | |
| | Third cathode active material layer: secondary particle 55 + single particle 45 | | |
| Example 7 | First cathode active material layer: secondary particle 55 + single particle 45 | 1.00 | 1.20 |
| | Second cathode active material layer: secondary particle 70 + single particle 30 | | |
| | Third cathode active material layer: secondary particle 85 + single particle15 | | |
| Comparative Example 1 | First cathode active material layer: secondary particle 85 + single particle 15 | 0.26 | 1.26 |
| Comparative Example 2 | First cathode active material layer: single particle100 | 0.33 | 1.31 |
| | Second cathode active material layer: secondary particle70 + single particle30 | | |
| Comparative Example 3 | First cathode active material layer: secondary particle70 + | 0.41 | 1.34 |
| | single particle 30 | | |
| | Second cathode active material layer: single particle100 | | |
| Comparative Example 4 | First cathode active material layer: secondary particle 70 + single particle 30 | 0.48 | 1.30 |
| | Second cathode active material layer: secondary particle 70 + single particle 30 | | |

Referring to Table 1, in the case of examples including a blend of secondary particles of the cathode active material particles and single particles of the cathode active material particles in each layer of the cathode active material layer having a multilayer structure, the electrode resistance increase rate was reduced. In addition, it was confirmed that the cathode active material maintained excellent adhesion without being broken even when increasing the density of the cathode.

In addition, it was confirmed that, when the mixing weight ratio of the second cathode active material particles to the first cathode active material particles in the first cathode active material layer was smaller than the mixing weight ratio of the second cathode active material particles to the first cathode active material particles in the second cathode active material layer, improvement of both adhesion and electrode resistance was excellent.

On the other hand, it was confirmed that, in the case of the comparative examples in which, even if single particles were included in the cathode active material layer and the cathode active material layer had a single layer structure or a multilayer structure, both polycrystalline cathode active material particles and single crystalline cathode active material particles were not included in each layer, the electrode resistance increase rate was higher than that of the examples. Further, it was confirmed that the adhesion was reduced when increasing the cathode density.

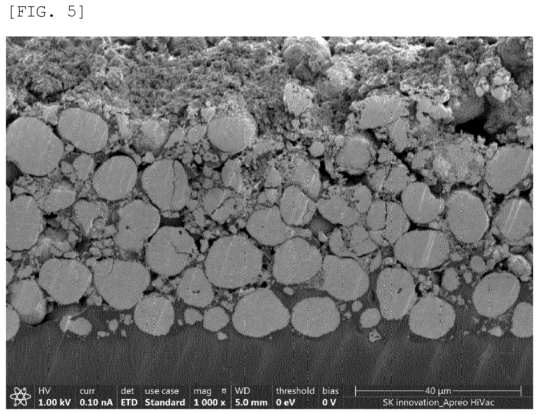

Referring to FIG. 5, in the case of Comparative Example 1, it can be confirmed that the possibility of cracks occurring in the secondary particle active material is increased, and when cracks occur, a network structure of the active material, the conductive material and the binder is destroyed, thereby resulting in a decrease in the electrode adhesion.

## Claims

1. A cathode for a lithium secondary battery comprising:
a cathode current collector; and
a cathode active material layer comprising a first cathode active material layer and a second cathode active material layer, which are sequentially laminated on the cathode current collector,
wherein the first cathode active material layer and the second cathode active material layer include first cathode active material particles and second cathode active material particles, which have different particle structures from each other in crystallography or morphology, and
a mixing weight ratio of the second cathode active material particles to the first cathode active material particles in the first cathode active material layer is different from a mixing weight ratio of the second cathode active material particles to the first cathode active material particles in the second cathode active material layer.

2. The cathode for a lithium secondary battery according to claim 1, wherein the first cathode active material particle has a polycrystalline structure, and the second cathode active material particle has a single crystal structure.

3. The cathode for a lithium secondary battery according to claims 1 or 2, wherein the first cathode active material particle has a secondary particle structure in which a plurality of primary particles are integrally aggregated, and the second cathode active material particle has a single particle structure.

4. The cathode for a lithium secondary battery according to one of claims 1 to 3, wherein the mixing weight ratios of the second cathode active material particles to the first cathode active material particles in the first cathode active material layer and the second cathode active material layer are 1/9 to 1, respectively.

5. The cathode for a lithium secondary battery according to one of claims 1 to 4, wherein the mixing weight ratio of the second cathode active material particles to the first cathode active material particles in the first cathode active material layer is 1/9 to 1/2, and
the mixing weight ratio of the second cathode active material particles to the first cathode active material particles in the second cathode active material layer is 1/2 to 1.

6. The cathode for a lithium secondary battery according to one of claims 1 to 5, wherein the mixing weight ratio of the second cathode active material particles to the first cathode active material particles in the first cathode active material layer is smaller than the mixing weight ratio of the second cathode active material particles to the first cathode active material particles in the second cathode active material layer.

7. The cathode for a lithium secondary battery according to one of claims 1 to 6, wherein the cathode active material layer further comprises at least one additional cathode active material layer laminated between the first cathode active material layer and the second cathode active material layer or on the second cathode active material layer, and
the additional cathode active material layer includes the first cathode active material particles and the second cathode active material particles.

8. The cathode for a lithium secondary battery according to claim 7, wherein a mixing weight ratio of the second cathode active material particles to the first cathode active material particles of at least one layer included in the additional cathode active material layer is different from each of the mixing weight ratios thereof in the first cathode active material layer and the second cathode active material layer.

9. The cathode for a lithium secondary battery according to claims 7 or 8, wherein the number of the additional cathode active material layers is 1 to 3.

10. The cathode for a lithium secondary battery according to one of claims 1 to 9, wherein the first cathode active material particles and the second cathode active material particles include a lithium-nickel composite metal oxide, respectively, and
a molar ratio of nickel among metal elements except for lithium in the first cathode active material particles is 0.8 or more.

11. The cathode for a lithium secondary battery according to claim 10, wherein a molar ratio of nickel among metal elements except for lithium in the second cathode active material particles is 0.8 or more.

12. The cathode for a lithium secondary battery according to one of claims 10 or 11, wherein the molar ratio of nickel among metal elements except for lithium in the second cathode active material particles is smaller than the molar ratio of nickel in the first cathode active material particles.

13. The cathode for a lithium secondary battery according to one of claims 1 to 12, wherein an average particle diameter (D₅₀) of the second cathode active material particles is smaller than an average particle diameter (D₅₀) of the first cathode active material particles.

14. The cathode for a lithium secondary battery according to one of claims 1 to 13, wherein a density of the cathode active material layer is 3.5 g/cc or more and 4.5 g/cc or less.

15. A lithium secondary battery comprising:
the cathode for a lithium secondary battery according to any one of claims 1 to 14; and
an anode disposed to face the cathode.
